Europäisches Patentamt

European Patent Office

Office européen des brevets

(19)

(11) Veröffentlichungsnummer: **0 344 630**
**A2**

(12)

# EUROPÄISCHE PATENTANMELDUNG

(21) Anmeldenummer: 89109495.5

(22) Anmeldetag: 26.05.89

(51) Int. Cl.⁴: **C09D 9/04**

(30) Priorität: 03.06.88 DE 3818987

(43) Veröffentlichungstag der Anmeldung:
06.12.89 Patentblatt 89/49

(84) Benannte Vertragsstaaten:
AT BE CH DE ES FR GB GR IT LI LU NL SE

(71) Anmelder: **Henkel Kommanditgesellschaft auf Aktien**
**Henkelstrasse 67**
**D-4000 Düsseldorf 13(DE)**

(72) Erfinder: **Hoffmann, Heinz-Peter**
**Reisholzer Strasse 19**
**D-4000 Düsselforf 1(DE)**
Erfinder: **Wegner, Jürgen, Dr.**
**Siegfriedstrasse 21**
**D-4000 Düsseldorf 11(DE)**

(54) **Verwendung von Polyacrylamidopolymerisaten in Tapetenablösern.**

(57) Die Verwendung von 10 bis 80 Gew.-% Feststoffe enthaltenden Umkehrdispersionen von wasserlöslichen anionischen oder nichtionischen Polyacrylamidpolymerisaten in Aniontenside und/oder nichtionischen Tenside und Wasser enthaltenden Ablösern für mit Wasser löslichen Klebern aufgebrachte wasserpermeable Tapeten gestattet die Herstellung schnell gebrauchsfähiger Tapetenablöser, die an senkrechten Flächen nicht abfließen und z.B. während der Verarbeitung nicht von einem Pinsel abtropfen.

EP 0 344 630 A2

## Verwendung von Polyacrylamidpolymerisaten in Tapetenablösern

Die Erfindung betrifft die Verwendung von 10 bis 80 Gew.-% Feststoffe enthaltenden Umkehrdispersionen von wasserlöslichen anionischen oder nichtionischen Polyacrylamidpolymerisaten in Aniontenside und/oder nichtionische Tenside und Wasser enthaltenden Ablösern für mit wasserlöslichen Klebern aufgebrachte, wasserpermeable Tapeten.

Das Ablösen von verklebten Tapeten verschiedenster Art gehört als Grundvoraussetzung bei der Renovierung von tapezierten Wand- und Deckenflächen zu den häufigsten Tätigkeiten des Malers und Heimwerkers. Durch die Vielfalt sowohl der Belagsstoffe als auch der Kleister und Kleber, welche unterschiedlich hohe Klebkräfte aufweisen, werden die Verarbeiter mit einer Vielzahl von Problemen konfrontiert. Je schwerer der Belag ist, desto höher muß die Klebkraft des jeweiligen Klebers sein, und mit steigender Klebkraft wächst der Arbeitsaufwand beim späteren Wiederablösung dieser Beläge.

Zur Zeit gibt es für das Problem der Ablösung von Tapeten im wesentlichen drei technischen Lösungswege. Der erste Lösungsweg kommt von der papiertechnischen Seite. Hierzu werden von der Industrie spaltbare Tapeten angeboten, bei denen beim Abziehen des Wandbelags das untere Papier mit der Verklebung auf der Wand verbleibt. Eine erneute Tapezierung kann auf dem zurückbleibenden unteren Papier erfolgen. Es ist jedoch ein Nachteil dieser Problemlösung, daß nach Jahren nicht mehr nachvollziehbar ist, wie stark diese Verklebung ist. Der zweite Lösungsweg besteht in einer rückseitigen, dehäsiven Ausrüstung der Tapetenpapiere. Hierdurch wird jedoch die Festigkeit der Verklebung reduziert. Der gleiche Effekt ist durch Auftragen eines handelsüblichen Wechselgrundes auf die zu tapezierenden Flächen erreichbar. Auch hier wird jedoch durch die dehäsive Einstellung des Grundierungsmittels die Klebkraft der abschließenden Tapezierung vermindert. Zudem ist bei diesen Verfahren die recht schwierige Dosierung der Materialien, die für die Dehäsivität verantwortlich sind, nachteilig.

Sind die Belagsstoffe auf herkömmliche Art verklebt worden, so muß gemäß einem dritten Lösungsweg versucht werden, den seinerzeit verwendeten Klebstoff wieder anzulösen. Wenn man hierzu Wasser verwendet, wird der Arbeitsaufwand viel zu hoch, da reines Wasser sehr langsam durch das Tapetenpapier zum Kleber gelangt. Um diesen Vorgang zu beschleunigen, werden dem Wasser ionische sowie nichtionische Tenside in fester und/oder flüssiger Form zugefügt. Die Tenside bewirken ein wesentlich schnelleres Eindringen des Wassers bis zu der getrockneten Kleberschicht und somit ein schnelleres Anlösen des Klebers. Der Einsatz der Tenside erfolgt meist über Konzentrate, die entsprechend den Anwendungsgebieten (schwere bis leichte Tapeten) mit Wasser verdünnt werden, und zwar bei einem Ansatzverhältnis von ca. 1:20 bis 1:100. Nachteilig hierbei ist, daß die einzelnen Bahnen, je nach Verklebung, oft mehrfach behandelt werden müssen, bevor sie von der Wand abgelöst werden können. Dies hat zur Folge, daß sehr viel Flüssigkeit aufgebracht werden muß, die dann teilweise von den Wänden auf den Boden läuft. Andererseits schlägt die aufgebrachte Flüssigkeit sehr schnell weg. Dies wiederum führt zu einem relativ hohen Flüssigkeitsverbrauch. Zusätzlich wird die Tensidkonzentration auf der zu tapezierenden Fläche stark erhöht, was je nach Untergrund auch zu Verfärbungen auf der neu verklebten Tapete führen kann, da Tenside die Löslichkeit von schwerlöslichen färbenden Bestandteilen in Wasser fördern. Bei pulverförmigen Tapetenlöserkonzentraten kommt hinzu, daß sie beim Anrühren stauben und sich auch teilweise nicht klar und rückstandsfrei lösen.

Um die aufgeführten Mängel des vorstehend genannten dritten Lösungsweges mindestens teilweise zu beheben, wurden pulverförmigen Tapetenablöser entwickelt, die durch Zugabe von Methylcellulose bzw. Carboxymethylcellulose eine selbstverdickende Wirkung zeigen. Hiervon erhoffte man sich eine längere offene Zeit während der Anwendung bei geringerem Verbrauch des Tapetenablösers. Zwar ist die offene Zeit dadurch verlängert worden, gleichzeitig ergaben sich jedoch andere Nachteile, da z.B. die Quelleigenschaften von Cellulosen jeglicher Art durch Tenside stark beeinträchtigt werden und man im allgemeinen 30 bis 60 min warten muß, bis das Material verarbeitungsfähig ist. Gleichzeitig ist die Standfestigkeit an senkrechten Flächen nur mäßig, da das Material aufgrund fehlender Fließgrenzen bzw. der niedrigen Viskosität nach unten abläuft. Außerdem neigen diese Produkte beim Anrühren zu einer starken Staubbildung.

Die Erfindung ist auf die Behebung der Nachteile der vorgenannten Ablöserrezepturen gerichtet. Diese Aufgabe wird durch die erfindungsgemäße Verwendung von 10 bis 80 Gew.-% Feststoffe enthaltenden Umkehrdispersionen von wasserlöslichen anionischen oder nichtionischen Polyacrylamidpolymerisaten in der eingangs genannten Art gelöst.

Nach der Lehre der vorliegenden Erfindung erhält man zweikomponentige Tapetenablöser - basierend auf einem mit Wasser entsprechend der Anwendung verdünnten Konzentrat zuzüglich eines nachträglich eingerührten Verdickers, die die vorgenannten Mängel der Tapetenablöser des Standes der Technik nicht aufweisen. Bei dem Verdikker handelt es sich um Polyacrylamid-Umkehremulsionen, die in organischen Lösemitteln gelöst sind. Diese Umkehremulsion wird in weiter unten angegebenen Verhältnissen mit der jeweiligen Tapetenablöserlösung verrührt und ergibt innerhalb von ca. 5 min. eine standfeste Tapetenablöserpaste, welche leicht zu verarbeiten ist, und zwar unabhängig davon, von welchem verdünnten Tensidkonzentrat man ausgeht. Die auf die Wand aufgebrachte Ablösermasse steht ohne Abrutschen und hat eine offene Zeit, die wesentlich günstiger ist als bei vergleichbaren anderen Materialien. Zusätzlich erspart man sich ein mehrfaches Auftragen des Tapetenablösers auf den abzulösenden Belag. Dieser Vorteil wird durch die Plastizität der angedickten Ablöserflüssigkeit erreicht.

Plastizität beschreibt die Struktur viskoser Flüssigkeiten mit einer zusätzlichen Fließgrenze, so daß Flüssigkeiten mit plastischen Eigenschaften sowohl den Feststoffen als auch den Flüssigkeiten zugerechnet werden können. Dispersionen der hier genannten Art bauen im Ruhezustand ein intermolekulares Netz auf, das einen Ortswechsel von Volumenelementen verhindert und der jeweiligen Substanz einen Feststoffcharakter mit fast unendlich hoher Viskosität verleiht. Sind die von außen wirkenden Kräfte kleiner als diejenigen, die das dreidimensionale Netz halten, so erfolgt lediglich elastische Verformung. Dies bringt den entscheidenden Vorteil der Standfestigkeit gegenüber anderen, z.B. mit Methylcellulose bzw. Carboxymethylcellulose und dergleichen eingedickten Tapetenablösern. Zusätzlich ist die Durchdringungsleistung der erfindungsgemäß erhaltenen Tapetenablöser in Abhängigkeit von den eingesetzten Tensidkonzentraten verbessert.

Als erfindungsgemäß zu verwendende anionische oder nichtionische Polyacrylamidpolymerisate, die sich zum Teil im Handel befinden, können insbesondere diejenigen eingesetzt werden, die in der US-C 4 059 552 beschrieben sind. Als Aniontenside und/oder nichtionische Tenside eignen sich die in der Tensidchemie und der Tapetenablösertechnik üblichen, vgl. J. Falbe (Hrsg.), Surfactants in Consumer Products, Springer Verlag Berlin (1987), S.54-106; besonders vorteilhaft sind hier Kombinationen von Alkylbenzolsulfonaten (als Aniontenside) und ethoxylierten Fettalkoholen (als nichtionische Tenside).

Unter wasserpermeablen Tapeten im Sinne der Erfindung sind solche Tapeten zu verstehen, die in sich wasserpermeabel sind oder vor dem Ablösen durch Perforationen, z.B. mittels Nagelrollen. wasserpermeabel gemacht worden sind.

Gemäß einer vorteilhaften Ausführungsform der Erfindung enthalten die wasserenthaltenden Ablöser 0,1 bis 3,0, insbesondere 0,2 bis 1,5 Gew.-% Aniontenside und/oder nichtionische Tenside.

Gemäß einer weiteren vorteilhaften Ausführungsform der Erfindung enthalten die Umkehrdispersionen 15 bis 60 Gew.-% wasserlösliche anionische oder nichtionische Polyacrylamidpolymerisate als Feststoffe.

Gemäß einer weiteren vorteilhaften Ausführungsform der Erfindung enthalten die Umkehrdispersionen organische Lösemittel aus der von aromatischen Kohlenwasserstoffen wie Toluol oder Xylol, Chlorkohlenwasserstoffen sowie aliphatischen und cycloaliphatischen Kohlenwasserstoffen einschließlich Mischungen derselben gebildeten Gruppe, die vorzugsweise Siedepunkte zwischen 80 und 180° C aufweisen. Derartige Kohlenwasserstoffe, insbesondere in gereinigter Form, weisen nur noch einen geringen Eigengeruch auf.

Gemäß einer weiteren vorteilhaften Ausführungsform der Erfindung beträgt das Gewichtsverhältnis von Aniontensiden zu nichtionischen Tensiden 1:0,2 bis 1:1,2, insbesondere 1:0,5 bis 1:1.

Gemäß einer weiteren vorteilhaften Ausführungsform der Erfindung beträgt das Gewichtsverhältnis von Umkehrdispersion zu Aniontenside und/oder nichtionische Tenside enthaltenden wäßrigen Lösungen 5 bis 30:100, insbesondere 10 bis 25:100.

Die Erfindung betrifft weiterhin ein Verfharen zur Herstellung eines schnell gebrauchsfähigen Tapetenablösers für mit wasserlöslichen Klebern aufgebrachte wasserpermeable Tapeten, das dadurch gekennzeichnet ist, daß man in eine 0,1 bis 3,0 gew.-%ige, insbesondere 0,2 bis 1,5 gew.-%ige wäßrige Lösung eines oder mehrerer Aniontenside und/oder nichtionischer Tenside(bzw. in ein entsprechend verdünntes Tensidkonzentrat) so viel einer 10 bis 80 gew.-%igen, insbesondere 15 bis 60 gew.-%igen Umkehrdispersion von wasserlöslichen anionischen und/oder nichtionischen Polyacrylamidpolymerisaten einrührt, daß die resultierende Lösung nach 5 min eine Viskosität von 10 bis 100, insbesondere von 20 bis 50 Pa.s bei 20° C, nach Brookfield (Spindel 6, 20U/min) aufweist.

Bevorzugt sind Umkehrdispersionen, die organische Lösemittel aus der von aromatischen Kohlenwasserstoffen wie Toluol oder Xylol, Chlorkohlenwasserstoffen sowie aliphatischen und cycloaliphatischen Kohlenwasserstoffen einschließlich Mischungen derselben gebildeten Gruppe, insbesondere mit Siedepunkten zwischen 80 und 180° C enthalten, weiterhin Gewichtsverhältnisse von Aniontensiden zu nichtionischen Tensiden von 1:0,2 bis 1:1,2, insbesondere 1:0,5 bis 1:1 sowie 5 bis 30, insbesondere 10 bis 25 Gew.-Teile der Umkehrdispersion auf 100 Gew.-Teile der Aniontenside und/oder nichtionischen Tenside.

Die Erfindung wird im folgenden Anhand eines bevorzugten Ausführungsbeispiels sowie von Vergleichsversuchen mit einem handelsüblichen Tapetenablöser näher erläutert.

Beispiel.

10 g eines handelsüblichen Tapetenablöserkonzentrats, bestehend aus 20 Gew.-% Alkylbenzolsulfonat, 10 Gew.-% eines ethoxylierten Fettalkohols und 70 Gew.-% Wasser, wurden in 500 g Wasser bei 20°C aufgelöst. Anschließend wurden in diese Lösung 33,3 g einer handelsüblichen anionischen Polyacrylamid-Umkehremulsion (wäßrige Lösung eines Copolymeren von alpha- und beta-ethylenisch ungesättigten Monomeren, feindispergiert in einem überwiegend aus Isoparaffinen bestehenden Kohlenwasserstoffgemisch, ca. 50 % Feststoffgehalt) mit den folgenden, herstellerseitig angegebenen Kenndaten:
Spezifisches Gewicht bei 25°C ca. 1,1
Dispersionsviskosität (Brookfield RVT, Spindel 3, Geschwindigkeit 20 bei 25°C) max. 3000 cP
Viskosität des Wassers bei Dispersionsverdickung mit 4% der Umkehremulsion (Brookfield RVT, Spindel 6, Geschwindigkeit 5 bei 25°C) max. 45.000 cP
gegeben. Nach ca. 5 min wurde das erhaltene Gemisch mit einem Rührstab kurz durchgeschlagen; man erhielt eine weiße, homogene verarbeitungsfertige Paste.

Vergleichsbeispiel

Zu Vergleichszwecken diente ein Tapetenablöserkonzentrat aus 75% Methylcellulose bzw. Carboxymethylcellulose und 25% Alkylbenzolsulfonat; 10 bis 20 g dieses Gemisches wurden in 500 g Wasser bei 20°C eingerührt. Dieses Produkt war frühestens nach 30 min verarbeitungsfertig.
Die vorgenannten Tapetenablöser wurden nach den im folgenden beschriebenen Testmethoden untersucht und verglichen.

a) Viskositätsentwicklung

Die Bestimmung der Viskosität nach Brookfield, RVT, 20U/min, Spindel 6 bei 20°C ergab für den Tapetenablöser gemäß der Erfindung nach 5 min eine Viskosität von 90% der Endviskosität, nach 60 min 100% der Endviskosität.
Der Vergleichsablöser hat nach 5 min weniger als 10% und nach 60 min 100% der Endviskosität erreicht.

b) Fließverhalten an senkrechten Flächen

Als Meßgerät für das Fließverhalten an senkrechten Flächen wurde das Ablaufgerät nach Daniel benutzt. Hierbei wurde das Produkt in eine Materialrinne gefüllt und 60 sec nach dem Senkrechtstellen des Geräts diejenigen Skalenteile abgelesen, die das Produkt beim Auslaufen aus der Rinne erreicht hatte.
Das erfindungsgemäße Produkt ergab 12 bis 14 Skalenteile nach 60 sec., d.h. es stand an senkrechten Flächen ohne abzufließen und tropfte nicht während der Verarbeitung aus einem Pinsel. Das Vergleichsprodukt ergab nach 60 sec 20 bis 22 Skalenteile, d.h. es floß von senkrechten Flächen ab und tropfte bei der Verarbeitung aus dem Pinsel.

C) Fließgrenzenbestimmung

Hierzu wurden die Tapetenablöser in einem computergesteuerten Viskosimeter (Fa. Haake, Karlsruhe; ROTOVISCO 12) getestet; es wurden die folgenden Meßparameter eingesetzt:
Meßsystem: MV II
Meßteil: 500
Schergefälle: 300
Empfindlichkeit: 5,0 min
Wartezeit t1: 5,0 min
Programmzeit t2: 5,0 min
Haltezeit t3: 5,0 min
Programmart: /1 = 0Λ = 1 1
Temperatur: 19,3°C
Die Messung ergab, daß der Tapetenablöser der Erfindung eine strukturviskose Flüssigkeit mit einer Fließgrenze (plastische Flüssigkeit) ist; die Fließgrenze liegt bei etwa 40 Pa.
Dagegen handelte es sich bei dem Vergleichsablöser um eine strukturviskose Flüssigkeit ohne Fließgrenze, die an senkrechten Flächen abfließt.

d) Bestimmung der offenen Zeit

Zur Bestimmung der offenen Zeit wurden die Tapetenablöser auf eine Gipskartonplatte (40 x 13 x 1cm) mittels eines Spiral-Filmaufziehgeräts (Typ 358) der Fa. Erichsen aufgezogen. Es wurde die Zeit bestimmt, die das Produkt bis zur völligen Eintrocknung benötigt (bei 20°C und 70% rel. Luftfeuchte).
Der Tapetenablöser der Erfindung wies eine offene Zeit von 1,5 bis 3 Stunden auf, d.h. es muß auch bei hartnäckigen Verklebungen nicht neu eingestrichen werden, da der Tapentenablöser lange naß stehen bleibt.
Das Vergleichsprodukt wies eine offene Zeit von 1 bis 2 Stunden auf, d.h. das Produkt trocknete wesentlich schneller aus; bei hartnäckigen Verklebungen muß es daher wieder neu aufgebracht werden.

## Ansprüche

1. Verwendung von 10 bis 80 Gew.-% Feststoffe enthaltenden Umkehrdispersionen von wasserlöslichen anionischen oder nichtionischen Polyacrylamidpolymerisaten in Aniontenside und/oder nichtionische Tenside und Wasser enthaltenden Ablösern für mit wasserlöslichen Klebern aufgebrachte, wasserpermeable Tapeten.

2. Verwendung nach Anspruch 1, dadurch gekennzeichnet, daß die Wasser enthaltenden Ablöser 0,1 bis 3,0, insbesondere 0,2 bis 1,5 Gew.-% Aniontenside und/oder nichtionische Tenside enthalten.

3. Verwendung nach Anspruch 1 oder 2, dadurch gekennzeichnet, daß die Umkehrdispersionen 15 bis 60 Gew.-% wasserlösliche anionische oder nichtionische Polyacrylamidpolymerisate enthalten.

4. Verwendung nach mindestens einem der Ansprüche 1 bis 3, dadurch gekennzeichnet, daß die Umkehrdispersionen organische Lösemittel aus der von aromatischen Kohlenwasserstoffen wie Toluol oder Xylol, Chlorkohlenwasserstoffen sowie aliphatischen und cycloaliphatischen Kohlenwasserstoffen einschließlich Mischungen derselben gebildeten Gruppe enthalten.

5. Verwendung nach Anspruch 4, dadurch gekennzeichnet, daß die organischen Lösemittel Siedepunkte zwischen 80 und 180°C aufweisen.

6. Verwendung nach mindestens einem der Ansprüche 1 bis 5, gekennzeichnet durch ein Gewichtsverhältnis von Aniontensiden zu nichtionischen Tensiden von 1:0,1 bis 1:1,2, insbesondere von 1:0,5 bis 1:1.

7. Verwendung nach mindestens einem der Ansprüche 1 bis 6, gekennzeichnet durch ein Gewichtsverhältnis von Umkehrdispersionen zu Aniontenside und/oder nichtionische Tenside enthaltenden wäßrigen Lösungen von 5 bis 30:100, insbesondere von 10 bis 25:100.

8. Verfahren zur Herstellung eines schnell gebrauchsfertigen Tapetenablösers für mit wasserlöslichen Klebern aufgebrachte wasserpermeable Tapeten, dadurch gekennzeichnet, daß man in eine 0,1 bis 3,0 gew.-%ige, insbesondere 0,2 bis 1,5 gew.-%ige wäßrige Lösung eines oder mehrerer Aniontenside und/oder nichtionische Tenside so viel einer 10 bis 80 gew.-%igen, insbesondere 15 bis 60 gew.-%igen Umkehrdispersion von wasserlöslichen anionischen und/oder nichtionischen Polyacrylamidpolymerisaten einrührt, daß die resultierende Lösung nach 5 min eine Viskosität von 10 bis 100, insbesondere von 20 bis 50 Pa.s bei 20°C nach Brookfield (Spindel 6, 20 U/min) aufweist.

9. Verfahren nach Anspruch 8, dadurch gekennzeichnet, daß man Umkehrdispersionen verwendet, die organische Lösemittel aus der von aromatischen Kohlenwasserstoffen wie Toluol oder Xylol, Chlorkohlenwasserstoffen sowie aliphatischen und cycloaliphatischen Kohlenwasserstoffen einschließlich Mischungen derselben gebildeten Gruppe enthalten.

10. Verfahren nach Anspruch 9, dadurch gekennzeichnet, daß man Umkehrdispersionen verwendet, die organische Lösemittel mit Siedepunkten zwischen 80 und 180°C enthalten.

11. Verfahren nach mindestens einem der Ansprüche 8 bis 10, gekennzeichnet durch ein Gewichtsverhältnis von Aniontensiden zu nichtionischen Tensiden von 1:0,2 bis 1:1,2, insbesondere von 1:0,5 bis 1:1.

12. Verfahren nach mindestens einem der Ansprüche 8 bis 10, dadurch gekennzeichnet, daß man 5 bis 30, insbesondere 10 bis 25 Gew.-Teile der Umkehrdispersion auf 100 Gew.-Teile der Aniontenside und/oder nichtionischen Tenside verwendet.